# EUROPEAN PATENT APPLICATION

(11) **EP 4 436 054 A1**
(43) Date of publication of application: **25.09.2024**
(21) Application number: 22899932.2
(22) Date of filing: 26.07.2022
(51) Int. Cl.: H04B 7/04, H04B 7/06

(54) **SIGNAL COMPENSATION METHOD, ELECTRONIC DEVICE, AND COMPUTER READABLE STORAGE MEDIUM**

(30) Priority: 30.11.2021 CN 202111443629
(71) Applicant: ZTE Corporation, Shenzhen, Guangdong 518057 (CN)
(72) Inventor: CHEN, Linyun, Shenzhen, Guangdong 518057 (CN); SHEN, Shaowu, Shenzhen, Guangdong 518057 (CN)
(74) Representative: Betten & Resch
(86) International application number: PCT/CN2022/107984
(87) International publication number: WO 2023/098112

(57) **Abstract**

Embodiments of the present application relate to the technical field of communications, and disclose a signal compensation method, an electronic device, and a computer readable storage medium. The signal compensation method is applied to the electronic device. The electronic device works in a multiple-input and multiple-output (MIMO) state. The method comprises: measuring the signal receiving strength of a plurality of MIMO channels of the electronic device (101); when it is determined, according to the signal receiving strength, that signal reception disequalization exists in the plurality of MIMO channels, determining the cause of the signal reception disequalization (102); and determining a compensation mode corresponding to the cause of the signal reception disequalization, and performing signal compensation according to the compensation mode corresponding to the cause of the signal reception disequalization until the signal reception equalization of the plurality of MIMO channels is detected (103).

## Description

### CROSS-REFERENCE TO RELATED APPLICATION

This application is based on and claims the priority of Chinese patent application No. 202111443629.X filed on November 30, 2021, the disclosure of which is incorporated herein by reference in its entirety.

### TECHNICAL FIELD

Embodiments of the present disclosure relate to the field of communications technologies, in particular to a signal compensation method, an electronic device, and a computer-readable storage medium.

### BACKGROUND

With the development of 5G communications technology, New Radio (NR) multi-input multi-output (MIMO) has been widely used in mobile phones. For example, Time Division Duplex (TDD) bands N78, N79 and N41 and Frequency-division duplex (FDD) bands N1 and N3 all support 4*4MIMO, enabling high-speed throughput transmission of four signals. Due to current design constraints, such as device loss, line loss, and variations in antenna efficiency in four MIMO channels, the reception of the four MIMO channels is imbalanced, and inevitably affects an existing design. How to make compensation and adjustment is an urgent technical problem to be solved for a current 5G terminal device.

### SUMMARY

A main objective of embodiments of the present disclosure is to provide a signal compensation method, an electronic device, and a computer-readable storage medium.

In order to achieve at least the above objective, an embodiment of the present disclosure provides a signal compensation method applied to an electronic device operating in a MIMO state, the method including: detecting received signal strengths of a plurality of MIMO channels of the electronic device; in response to determining, according to the received signal strengths, that signal reception imbalance exists among the plurality of MIMO channels; determining a cause of the signal reception imbalance; and determining a compensation manner corresponding to the cause of the signal reception imbalance, and performing signal compensation according to the compensation manner corresponding to the cause of the signal reception imbalance until signal reception equalization is detected on the plurality of MIMO channels.

In order to achieve at least the above objective, an embodiment of the present disclosure further provides an electronic device, including: at least one processor; and a memory communicatively connected to the at least one processor, where the memory stores instructions executable by the at least one processor, and the instructions, when executed by the at least one processor, enable the at least one processor to execute the signal compensation method described above.

In order to achieve at least the above objective, an embodiment of the present disclosure further provides a computer-readable storage medium storing a computer program which, when executed by a processor, causes the processor to perform the signal compensation method described above.

### BRIEF DESCRIPTION OF DRAWINGS

FIG. 1 is a flowchart of a signal compensation method according to an embodiment of the present disclosure;
FIG. 2 is a schematic diagram of a MIMO path according to an embodiment of the present disclosure;
FIG. 3 is a flowchart of a manner of adjusting a gain of a low noise amplifier (LNA) according to an embodiment of the present disclosure;
FIG. 4 is a schematic diagram of a previous-stage filter and/or a post-stage filter that can be bypassed through control according to an embodiment of the present disclosure;
FIG. 5 is a schematic diagram of a MIMO channel including an attenuation network according to an embodiment of the present disclosure;
FIG. 6 is a schematic diagram of antenna switching according to an embodiment of the present disclosure;
FIG. 7 is a schematic diagram of an implementation process of adjusting a radiation direction of a first target MIMO antenna on a plurality of MIMO channels to cause an adjusted radiation direction to face a base station according to an embodiment of the present disclosure;
FIG. 8 is a schematic diagram of modules in a terminal device implementing a signal compensation method according to an embodiment of the present disclosure;
FIG. 9 is a flowchart of another signal compensation method according to an embodiment of the present disclosure; and
FIG. 10 is a schematic diagram of an electronic device according to an embodiment of the present disclosure.

### DETAILED DESCRIPTION

In order to make the purposes, technical schemes and advantages of the embodiments of the present disclosure clearer, the embodiments of the present disclosure will be described in detail with reference to the accompanying drawings. Those of ordinary skill in the art can understand that, in various embodiments of the present disclosure, many technical details have been set forth in order to enable readers to better understand the present disclosure. However, even without these technical details and various changes and modifications based on the following embodiments, the technical schemes of the present disclosure can be implemented. The following embodiments are divided for convenience of description, and should not constitute any limitation on the specific implementation of the present disclosure. The embodiments can be combined with and referenced by each other with no conflict.

In order to facilitate the understanding of the embodiments of the present disclosure, related techniques in the present disclosure will be briefly explained first.

Buckets Effect of MIMO throughput: An NR MIMO antenna in a specific band consists of two or four antennas, one of which is responsible for main transmitting and receiving, and the other one or the other three are responsible for diversity or MIMO receiving, that is, there are at most four RX antennas. When receiving quality, of one of the four RX antennas, for example, a received signal strength indicator (RSSI), a reference signal receiving power (RSRP) or a signal-to-noise ratio (SNR), is quite poor, even if the other three antennas have good receiving performance and one of the three antennas has super receiving performance, a final combined throughput will be greatly reduced. On the contrary, if RSRPs of the four antennas are quite equalized, even if none of them is especially excellent, a final combined throughput will be quite high. The RSRPs of the four RX antennas are equivalent to four boards of a bucket. According to the Buckets Effect, a shorter board should be avoided, or otherwise an upper limit of a throughput of the bucket will be restricted by a specific RX path.

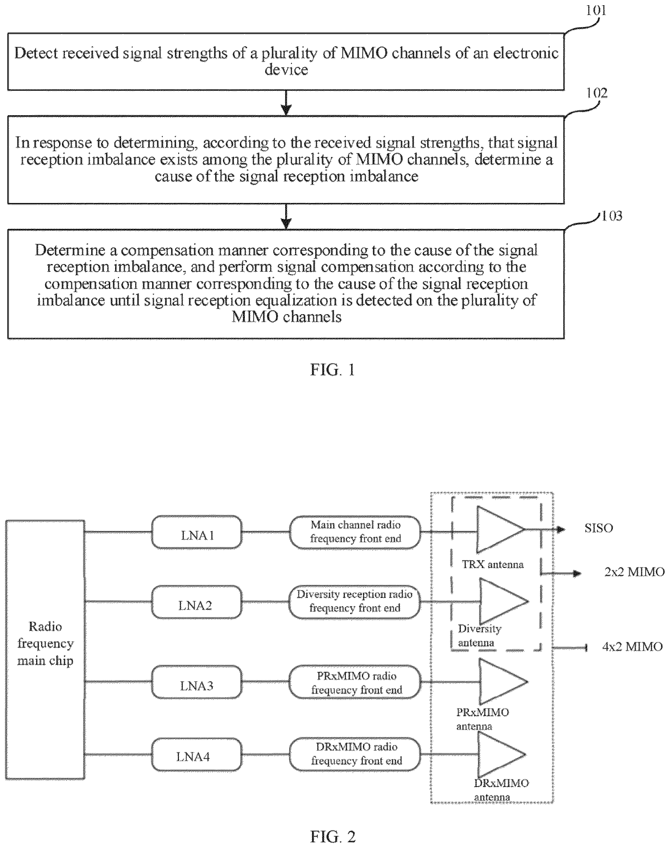

In order to ensure the equalization of signal reception of a plurality of MIMO channels and improve the throughput performance of an electronic device, an embodiment of the present disclosure provides a signal compensation method applied to an electronic device which can operate in a MIMO state. The electronic device may be a terminal device with an NR MIMO function, a Customer Premise Equipment (CPE), or the like. The terminal device may be a mobile phone, a tablet computer, or the like. The electronic device can operate in the MIMO state. A flowchart of the signal compensation method can refer to FIG. 1, including steps 101 to 103.

At S101, received signal strengths of a plurality of MIMO channels of the electronic device are detected.

At S102, in response to determining, according to the received signal strengths, that signal reception imbalance exists among the plurality of MIMO channels, a cause of the signal reception imbalance is determined.

At S103, a compensation manner corresponding to the cause of the signal reception imbalance is determined, and signal compensation is performed according to the compensation manner corresponding to the cause of the signal reception imbalance until signal reception equalization is detected on the plurality of MIMO channels.

In this embodiment, in response to determining that signal reception imbalance exists on the MIMO channels, according to the analyzed cause of the imbalance phenomenon, a targeted compensation manner is used for signal compensation until signal reception equalization is detected on the plurality of MIMO channels. Corresponding compensation manners targeted at different causes of the imbalanced phenomenon are used, to perform adaptive signal compensation. Therefore, the effectiveness of signal compensation can be improved, reception equalization of the various MIMO channels of the electronic device can be ensured, and throughput performance of electronic device can be improved.

In S101, the received signal strengths of the plurality of MIMO channels can also be understood as signal quality on the plurality of MIMO channels, and a larger received signal strength indicates better signal quality. The received signal strengths of the MIMO channels may be obtained by analyzing a signal sent by a base station to the electronic device, for example, a terminal device. For example, the electronic device may determine the received signal strengths of the plurality of MIMO channels by one or any combination of the following: an RSRP, an SNR, a bit error rate (BER), a throughput, or the like of a signal transmitted by the base station received on each MIMO channel. For example, during determining the received signal strengths of the plurality of MIMO channels by an RSRP of each MIMO channel, the RSRP of each MIMO channel may be regarded as the received signal strength of each MIMO channel. During determining of the received signal strengths of the plurality of MIMO channels by the RSRP, SNR, BER and throughput, the received signal strengths of the plurality of MIMO channels may be determined by a comprehensive consideration of the RSRP, SNR, BER and throughput.

In S 102, the electronic device may first determine, according to the received signal strengths of the plurality of MIMO channels, whether signal reception imbalance exists among the plurality of MIMO channels, and in response to determining that signal reception imbalance exists, determine the cause of the signal reception imbalance.

Here, it is determined, according to the received signal strengths of the plurality of MIMO channels, whether signal reception imbalance exists among the plurality of MIMO channels, in the following manner. A difference of received signal strengths of any two MIMO channels is acquired. If there is a difference greater than a preset equalization threshold, it is considered that signal reception imbalance exists among the plurality of MIMO channels. If there is no difference greater than the preset equalization threshold, it is considered that signal reception imbalance does not exist on the plurality of MIMO channels, that is, signal reception on the plurality of MIMO channels is equalized. The preset equalization threshold may be set based on an actual requirement, for example, the threshold may be set to 2 dB, to indicate that there is not much difference in received signal strengths of the plurality of MIMO channels.

The cause of signal reception imbalance mentioned in S 102 includes any one of the following: circuit or antenna-related factors, a holding posture of the electronic device, a directivity difference between the electronic device and the base station, or the like. The electronic device may determine the cause of signal reception imbalance according to a current usage scenario of the terminal device.

The following describes the cause of the holding posture of the electronic device. The electronic device being a terminal device is used as an example. If the terminal device is placed in a hand during operation, the hand will hold or approach a specific NR MIMO antenna, which leads to a sharp drop in the efficiency of the MIMO antenna, thus affecting equalization among a plurality of MIMO antennas. The terminal device being a mobile phone is used as an example. During the use of the mobile phone, when a finger or palm of a user touches a corresponding location of a frame of the mobile phone, a certain blocking effect is generated, which will block or attenuate most of NR signals. If the finger or palm holds the mobile phone at a specific area at the edge, and a holding location is just at or near a location of a specific MIMO antenna, it can be determined that the cause of signal reception imbalance is: the holding posture of the mobile phone.

The following describes the cause of the directivity difference between the electronic device and the base station. The electronic device being a terminal device is used as an example. As the number of 5G base stations is limited within a range in which the terminal device is located, a directivity difference between the plurality of MIMO antennas in a specific NR band of the terminal device relative to the base station can be understood as follows: If a radiation direction of a specific MIMO antenna of the terminal device is far away from the base station or has a specific included angle, an RSRP signal of the antenna will be weak, while if a radiation direction of a specific MIMO antenna of the terminal device points to the base station, an RSRP signal of the MIMO antenna will be strong. This strength difference is caused by the directivity difference between the electronic device and the base station, which may eventually lead to an of MIMO reception and further affect the throughput. In other words, if there is a MIMO antenna with a radiation direction far away from or forming a specific included angle with the base station and an antenna with a radiation direction pointing to the base station in the plurality of MIMO antennas, it can be determined that the cause of signal reception imbalance is: the directivity difference between the electronic device and the base station. The foregoing specific included angle may be preset according to an actual requirement. This embodiment does not limit a specific value of the included angle. The specific included angle is used to represent an included angle between a radiation direction and the base station.

In an example, if it is determined that the cause of the signal reception imbalance is neither the holding posture of the electronic device nor the directivity difference between the electronic device and the base station, it can be determined that the cause of the signal reception imbalance is factors related to a circuit in the electronic device or antenna-related factors.

In S103, the electronic device may determine the compensation manner corresponding to the cause of the signal reception imbalance, and perform signal compensation according to the determined compensation manner until the signal reception equalization is detected on the plurality of MIMO channels. Corresponding compensation manners may be preset for different causes, and the compensation manners corresponding to the different causes are not completely the same. For example, signal attenuation is performed for a MIMO channel with a larger received signal strength in the plurality of MIMO channels to reduce the received signal strength of the MIMO channel, and signal enhancement is performed for a MIMO channel with a smaller received signal strength in the plurality of MIMO channels to increase the received signal strength of the MIMO channel, thereby finally enabling signal reception equalization among the plurality of MIMO channels. Here, detection of signal reception equalization among the MIMO channels can be understood as: a difference between received signal strengths of any two of the plurality of MIMO channels is detected to be less than the preset equalization threshold.

In an embodiment, before S 101, the method further includes: detecting a throughput service of the electronic device; determining a characteristic of the throughput service; and in response to determining, according to the characteristic of the throughput service, that the plurality of MIMO channels of the electronic device need to be enabled, enabling the plurality of MIMO channels of the electronic device. Here, the characteristic of the throughput service may include: a throughput demand, a requirement of the throughput services for overall sensitivity, or a scenario of the throughput service, for example, a strong signal scenario, a medium signal scenario, or a weak signal scenario. A higher throughput demand, a higher requirement for overall sensitivity, and a stronger signal in the scenario of the throughput service indicate a larger quantity of MIMO channels enabled. In other words, the electronic device may detect a current MIMO service first. The service here refers to the throughput service of the electronic device, including an uplink throughput and a downlink throughput. The downlink throughput includes simple input simple output (SISO), 2x2 MIMO, and 4x4 MIMO. The uplink throughput includes SISO and 2x2 MIMO. There are strong signal, medium signal, weak signal and other scenarios for the service. For a schematic diagram of a MIMO path, refer to FIG. 2, which includes four MIMO channels, and MIMO antennas on the four MIMO channels are: a TRX antenna, a diversity antenna, a PRxMIMO antenna, a DRxMIMO antenna. The TRX antenna corresponds to SISO, the TRX antenna and the diversity antenna form 2x2 MIMO, and the TRX antenna, the diversity antenna, the PRxMIMO antenna, and the DRxMIMO antenna jointly form 4x4MIMO. When it is detected that the current electronic device has a high throughput demand, it is first determined whether the current high throughput demand is for uplink or downlink, and then the throughput demand is determined, so that the corresponding number of MIMO channels are enabled according to the throughput demand. It can be understood that a higher throughput demand indicates a larger quantity of MIMO channels enabled. Further, when the electronic device operates in a weak signal scenario and has a specific requirement for overall sensitivity, it also needs to enable a specific quantity of MIMO channels. For example, a higher requirement for overall sensitivity indicates a larger quantity of MIMO channels that need to be enabled. The received signal strengths of the plurality of MIMO channels of the electronic device detected in S101 may include received signal strengths of the plurality of MIMO channels enabled.

In an embodiment, in response to determining that the cause of the signal reception imbalance includes circuit or antenna-related factors, the compensation manner includes: LNA gain compensation and/or attenuation compensation.

In response to the compensation manner including the LNA gain compensation, the performing signal compensation according to the compensation manner corresponding to the cause of the signal reception imbalance in S 103 includes: compensating a gain of an LNA on a first target MIMO channel in the plurality of MIMO channels, which is beneficial to targeted compensation for the signal reception imbalance caused by the circuit or antenna-related factors. Here, the first target MIMO channel may be a channel requiring LNA gain compensation, which may include increasing or decreasing the gain of the LNA. For example, in response to a received signal strength of the first target MIMO channel being greater than a received signal strength of a third target MIMO channel in the plurality of MIMO channels, the gain of the LNA on the first target MIMO channel may be reduced. In response to the received signal strength of the first target MIMO channel being less than the received signal strength of the third target MIMO channel, the gain of the LNA on the first target MIMO channel may be increased. The third target MIMO channel may be a MIMO channel other than the first target MIMO channel in the plurality of MIMO channels.

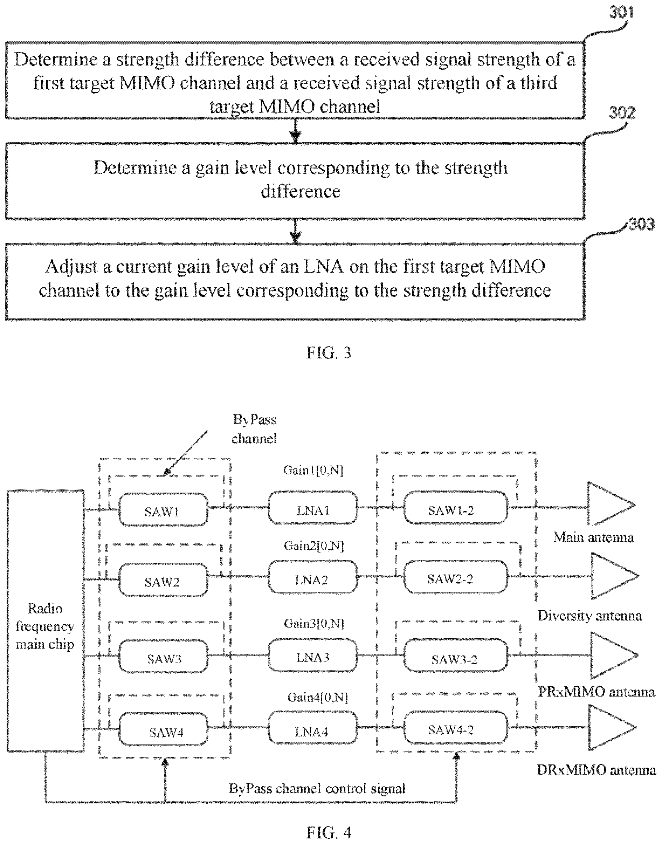

In an embodiment, the compensating a gain of an LNA on a first target MIMO channel in the plurality of MIMO channels includes: adjusting the gain of the LNA on the first target MIMO channel according to the received signal strength of the first target MIMO channel and the received signal strength of the third target MIMO channel in the plurality of MIMO channels, to cause a strength difference between the received signal strength of the first target MIMO channel and the received signal strength of the third target MIMO channel to be less than the preset equalization threshold under the action of an adjusted gain. For example, the manner of adjusting the gain of the LNA can be implemented as shown in FIG. 3.

At S301, the strength difference between the received signal strength of the first target MIMO channel and the received signal strength of the third target MIMO channel is determined.

At S302, a gain level corresponding to the strength difference is determined. Here, the gain level is corresponding to a gain, and a larger gain level indicates a smaller gain.

At S303, a current gain level of the LNA on the first target MIMO channel is adjusted to the gain level corresponding to the strength difference.

In S301, the electronic device may calculate the strength difference between the received signal strength of the first target MIMO channel and the received signal strength of the third target MIMO channel.

In S302, the LNA within the electronic device generally includes a plurality of gain levels, such as levels of 0, 1, 2, 3, 4, 5, ..., N, where a gain corresponding to level 0 is the largest and a gain corresponding to level N is the smallest. For example, N=7, and in this case, a gain corresponding to gain level 7 is the smallest. For example, in FIG. 4, a gain level of LNA1 is Gain1[0, N]. Assuming that the first target MIMO channel is a MIMO channel on which LNA1 is located, the first target MIMO channel includes previous-stage filters SAW1 and LNA1, a post-stage filter SAW1-2, and a main antenna. When the gain level of LNA1 on the first target MIMO channel is M, M<=N, and when the received signal strength of the first target MIMO channel is higher or lower than that of another MIMO channel, that is, the third target MIMO channel, a gain level corresponding to a strength difference may be obtained by using a preset mapping relationship. Here, the preset mapping relationship may be obtained by testing before the electronic device is produced, and the mapping relationship involves an increment and a decrement of a received signal strength corresponding to each gain level, for example, a decrement of a received signal strength corresponding to a shift from level M to level (M+1), an increment of a received signal strength corresponding to a shift from level (M+1) to level M, a decrement of a received signal strength corresponding to a shift from level M to level (M+3), an increment of a received signal strength corresponding to a shift from level (M+3) to level M, or the like. If the strength difference by subtracting the received signal strength of the third target MIMO channel from the received signal strength of the first target MIMO channel is a positive strength difference, the positive strength difference may be considered as a decrement that the received signal strength of the first target MIMO channel is to be reduced. A gain level corresponding to the strength difference can be determined according to the current gain level of LNA1 on the first target MIMO channel, the decrement that the received signal strength is to be reduced and the mapping relationship. Similarly, if the strength difference by subtracting the received signal strength of the third target MIMO channel from the received signal strength of the first target MIMO channel is a negative strength difference, the negative strength difference may be considered as an increment that the received signal strength of the first target MIMO channel is to be increased. A gain level corresponding to the strength difference can be determined according to the current gain level of LNA1 on the first target MIMO channel, the increment that the received signal strength is to be increased and the mapping relationship.

In S303, after determining the gain level corresponding to the strength difference, the electronic device may adjust the current gain level of the LNA on the first target MIMO channel to the gain level corresponding to the strength difference.

In this embodiment, LNA gain compensation facilitates equalization of signal reception among the plurality of MIMO channels by using existing the LNA in the MIMO channel without adding additional devices. By adjusting the gain level of the LNA, the gain of the LNA can be adjusted conveniently and accurately.

In an embodiment, after the compensating a gain of an LNA on a first target MIMO channel in the plurality of MIMO channels, the method further includes: in response to gain saturation being reached and signal reception equalization undetected on the plurality of MIMO channels, controlling, by using a bypass control signal, a previous-stage filter and/or a post-stage filter of the LNA on the first target MIMO channel not to operate until signal quality equalization is detected on the plurality of MIMO channels. Here, gain saturation being reached can be understood as that the gain of the LNA has been adjusted to a maximum. In other words, if the gain of the LNA has been adjusted to the maximum and signal reception equalization has not been detected on the plurality of MIMO channels, the previous-stage filter and/or the post-stage filter of the LNA on the first target MIMO channel is controlled, by using the bypass control signal, not to operate until signal quality equalization is detected on the plurality of MIMO channels. The previous-stage filter of the LNA is a filter preceding to the LNA, and the post-stage filter of the LNA is a filter following the LNA. Refer to FIG. 4. A previous-stage filter of LNA1 is SAW1, and a post-stage filter of LNA1 is SAW1-2. Bypass can be understood as short-circuiting a bypassed filter. If a filter to be bypassed is SAW1, SAW1 is controlled to be short-circuited.

Specifically, whether the previous-stage filter or the post-stage filter is controlled, by using the bypass control signal, not to operate can be set according to an actual requirement. For example, the previous-stage filter is first controlled, by using the bypass control signal, not to operate, and then whether signal quality equalization is achieved among the plurality of MIMO channels is detected. If the signal quality equalization is achieved, other filters are no longer controlled to not to operate. If the signal quality equalization is not achieved, the post-stage filter may be controlled, by using the bypass control signal, not to operate. If the signal quality equalization is still not achieved, the bypass control signal may be used to control both the previous-stage filter and the post-stage filter not to operate.

For example, refer to FIG. 4. A radio frequency (RF) main chip in the electronic device may send a ByPass path control signal (namely, the bypass control signal) to a ByPass path corresponding to a filter that needs to be bypassed (the previous-stage filter and/or the post-stage filter), and control, by using the ByPass path control signal, the previous-stage filter and/or the post-stage filter not to operate. The previous-stage filter and/or the post-stage filter may be short-circuited by using the bypass control signal so that the previous-stage filter and/or the post-stage filter do not operate.

It should be noted that in this embodiment, the radio frequency main chip sending the ByPass path control signal is merely used as an example. In specific implementation, the ByPass path control signal may alternatively be sent by another device in the electronic device.

In this embodiment, there is provided a solution after the gain saturation of the LNA, which is beneficial to further compensation and adjustment under the condition of gain saturation of the LNA by bypassing the previous-stage filter and/or the post-stage filter, so as to achieve an accurate MIMO equalization state.

In response to the compensation manner including the attenuation compensation, the performing signal compensation according to the compensation manner corresponding to the cause of the signal reception imbalance in S 103 includes: activating an attenuation network on a second target MIMO channel in the plurality of MIMO channels to attenuate a received signal strength of the second target MIMO channel, which is beneficial to targeted attenuation compensation for the signal reception imbalance caused by the circuit or antenna-related factors. Here, the second target MIMO channel may be a MIMO channel that has a higher received signal strength and needs attenuation of the received signal strength in the plurality of MIMO channels. Each MIMO channel may be provided with an attenuation network to be activated when signal strength attenuation is needed, thereby achieving attenuation of a received signal strength of the MIMO channel.

In an embodiment, LNA gain compensation can be understood as a fixed gain compensation, and attenuation compensation can be understood as a non-fixed gain compensation. When fixed gain compensation is needed, the LNA gain compensation can be used for signal compensation, and when non-fixed gain compensation is needed, the attenuation compensation can be used for signal compensation.

In an embodiment, the attenuation network includes a first attenuation network and/or a second attenuation network; the first attenuation network is provided between an LNA and a MIMO antenna on the MIMO channel for attenuating the received signal strength of the second target MIMO channel; and the second attenuation network is provided on the MIMO antenna on the MIMO channel for attenuating the received signal strength of the second target MIMO channel by adjusting efficiency of the MIMO antenna. The first attenuation network can be understood as signal strength attenuation on a conduction path of a signal, and the second attenuation network can be understood as signal strength attenuation on an antenna path of the signal.

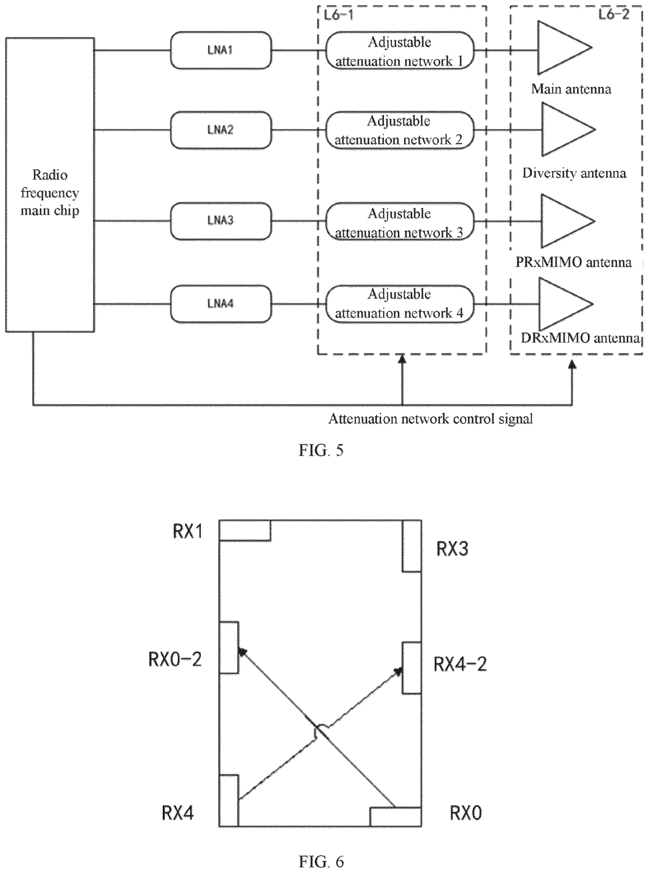

For example, refer to FIG. 5. The first attenuation network is L6-1 in the figure and the second attenuation network is L6-2 in the figure. The plurality of MIMO channels includes four MIMO channels in the figure, and each MIMO channel includes an LNA and a MIMO antenna. The LNAs on the four MIMO channels may be LNA1, LNA2, LNA3 and LNA4 as shown in FIG. 5, respectively. The MIMO antennas on the four MIMO channels may be a main antenna, a diversity antenna, a PRxMIMO antenna and a DRxMIMO antenna as shown in FIG. 5, respectively. The first attenuation networks disposed between the LNAs and the MIMO antennas on the MIMO channels may include an adjustable attenuation network 1, an adjustable attenuation network 2, an adjustable attenuation network 3, and an adjustable attenuation network 4 as shown in FIG. 5. The second attenuation network may also be referred to as an antenna efficiency attenuation module, and in particular may be a tuning device which may be placed on each MIMO antenna for adjusting antenna efficiency of the MIMO antenna at start-up. The adjustment herein mainly refers to reduction, that is, the second attenuation network may be used for reducing the antenna efficiency of the MIMO antenna at start-up.

In an embodiment, an implementation of activating an attenuation network on a second target MIMO channel in the plurality of MIMO channels may be as follows: The RF main chip sends an attenuation network control signal to the attenuation network on the second target MIMO channel, and controls, by using the attenuation network control signal, the attenuation network on the second target MIMO channel to activate. It should be noted that in this embodiment, the radio frequency main chip sending the attenuation network control signal is merely used as an example. In specific implementation, the attenuation network control signal may alternatively be sent by another device in the electronic device.

In an embodiment, the attenuation network includes the first attenuation network and the second attenuation network. An attenuation degree that the first attenuation network can attenuate is greater than an attenuation degree that the second attenuation network can attenuate. When the signal reception imbalance is not severe, the second attenuation network may be used to make fine adjustment to achieve equalization. When the signal reception imbalance is severe, the first attenuation network is responsible for coarse adjustment, and then the second attenuation network makes fine adjustment to achieve equalization in signal reception. Here, the signal reception imbalance not being severe can be understood as a difference between the received signal strength of the second target MIMO channel and a received signal strength of a MIMO channel other than the second target MIMO channel in the plurality of MIMO channels is not large, and can be understood as the difference between received signal strengths of the two MIMO channels is less than a preset difference, which can be set according to an actual requirement. This is not specifically limited in this embodiment.

In an embodiment, in response to determining that the cause of the signal reception imbalance includes circuit or antenna-related factors, the compensation manner includes: LNA gain compensation, and attenuation compensation. The performing signal compensation according to the compensation manner corresponding to the cause of the signal reception imbalance in S103 includes: compensating a gain of an LNA on the first target MIMO channel in the plurality of MIMO channels; and in response to gain saturation being reached and signal reception equalization undetected on the plurality of MIMO channels, activating an attenuation network on the second target MIMO channel in the plurality of MIMO channels to attenuate the received signal strength of the second target MIMO channel. In other words, the LNA gain compensation and the attenuation compensation may be used in combination for signal compensation.

In an actual scenario, there may be many complicated situations in four MIMO channels, such as two channels each having a high received signal strength and two channels each having a low received signal strength, three channels each having a high received signal strength and one channel having a low received signal strength, or one channel having a high received signal strength and three channels each having a low received signal strength. In this embodiment, the following compensation principle can be adopted for compensation. A signal on a MIMO channel with a weaker received signal strength is enhanced first, and if the signal can no longer be enhanced, a signal on a MIMO channel with a stronger received signal strength is attenuated, so that signal reception among the four MIMO channels is equalized. Here, the signal on the MIMO channel with a weaker received signal strength can be enhanced by using the LNA gain compensation to increase a gain of an LNA, and the signal on the MIMO channel with a stronger received signal strength can be attenuated by using the attenuation compensation manner.

In this embodiment, there is provided a solution after the gain saturation of the LNA, which is beneficial to further compensation and adjustment under the condition of gain saturation of the LNA by using the attenuation compensation, so as to achieve an accurate MIMO equalization state.

In an embodiment, in response to determining that the cause of the signal reception imbalance includes a holding posture of the electronic device, the compensation manner includes one or any combination of the following: holding posture compensation, LNA gain compensation, or attenuation compensation. In response to the compensation manner including the holding posture compensation, the performing signal compensation according to the compensation manner corresponding to the cause of the signal reception imbalance in S 103 includes: determining a MIMO antenna affected by the holding posture of the electronic device, and switching the affected MIMO antenna to a target antenna. Here, the target antenna is an antenna free of an effect of the holding posture other than MIMO antennas on the plurality of MIMO channels in the electronic device. In response to the compensation manner including the LNA gain compensation, the performing signal compensation according to the compensation manner corresponding to the cause of the signal reception imbalance in S 103 includes: compensating a gain of an LNA on the first target MIMO channel in the plurality of MIMO channels; and in response to the compensation manner including the attenuation compensation, the performing signal compensation according to the compensation manner corresponding to the cause of the signal reception imbalance in S103 includes: activating an attenuation network on a second target MIMO channel in the plurality of MIMO channels to attenuate a received signal strength of the second target MIMO channel. Here, the LNA gain compensation and attenuation compensation have been described above. Taking the electronic device being a handheld terminal device as an example, the holding posture compensation is explained below:
In an operating process of the handheld terminal device, a hand may hold or approach a specific MIMO antenna, thus affecting signal reception of the MIMO antenna. In this case, the handheld terminal device can position the specific MIMO antenna that is affected, that is, the handheld terminal device can determine the MIMO antenna affected by the holding posture of the handheld terminal device. The handheld terminal device includes other antennas in addition to the MIMO antenna, from which the handheld terminal device can determine a target antenna that is not affected by the holding posture of the handheld terminal device, and switch the MIMO antenna affected by the holding posture of the handheld terminal device to the target antenna.

For example, refer to FIG. 6. In FIG. 6, RX0, RX1, RX3 and RX4 are MIMO antennas in four MIMO channels respectively, and RX0-2 and RX4-2 are antennas other than the MIMO antennas on the handheld terminal devices. Assuming that RX0 and RX4 are MIMO antennas affected by the holding posture of the handheld terminal device, and RX0-2 and RX4-2 are antennas not affected by the holding posture of the handheld terminal device, RX0 can be switched to RX0-2, and RX4 can be switched to RX4-2. Here, the method of switching an antenna may be realized by a double-pole double-throw (DPDT) switch or the like, which is not specifically limited in this embodiment.

In an embodiment, in response to determining that the cause of the signal reception imbalance includes the holding posture of the electronic device, the LNA gain compensation and/or attenuation compensation may be directly used for signal compensation, or the holding posture manner can be used for signal compensation first, and then the LNA gain compensation and/or attenuation compensation are used to make fine adjustment to achieve equalization in received signal strengths of the plurality of MIMO channels. Here, the holding posture compensation manner being used first for signal compensation is suitable for a situation that the antenna efficiency is seriously reduced and cannot be compensated.

The embodiment is beneficial for targeted compensation for a signal reception imbalance caused by the holding posture.

In an embodiment, in response to determining that the cause of the signal reception imbalance includes a directivity difference between the electronic device and a base station, the compensation manner includes one or any combination of the following: directivity compensation, LNA gain compensation, or attenuation compensation. In response to the compensation manner including the directivity compensation, the performing signal compensation according to the compensation manner corresponding to the cause of the signal reception imbalance in S103 includes: adjusting a radiation direction of a first target MIMO antenna on the plurality of MIMO channels, to cause an adjusted radiation direction to face the base station; where a received signal strength of the first target MIMO antenna is less than a first preset strength; or switching the first target MIMO antenna to a second target antenna; where the second target antenna is an antenna other than MIMO antennas on the plurality of MIMO channels in the electronic device, and a received signal strength of the second target antenna is greater than a second preset strength; or guiding a user using the electronic device to change an orientation relative to the base station so that after the user changes the orientation, a changed orientation faces a location of the base station. In response to the compensation manner including the LNA gain compensation, the performing signal compensation according to the compensation manner corresponding to the cause of the signal reception imbalance in S103 includes: compensating a gain of an LNA on the first target MIMO channel in the plurality of MIMO channels. In response to the compensation manner including the attenuation compensation, the performing signal compensation according to the compensation manner corresponding to the cause of the signal reception imbalance in S103 includes: activating an attenuation network on a second target MIMO channel in the plurality of MIMO channels to attenuate a received signal strength of the second target MIMO channel. Here, the LNA gain compensation and attenuation compensation have been described above. Taking the electronic device being a terminal device as an example, the directivity compensation is mainly explained below.

Directivity compensation manner 1: A radiation direction of a first target MIMO antenna on the plurality of MIMO channels is adjusted, to cause an adjusted radiation direction to face a base station; where a received signal strength of the first target MIMO antenna is less than a first preset strength; and the first preset strength may be set according to an actual requirement, and is used to indicate that the received signal strength is weak. Adjusting the radiation direction of the first target MIMO antenna may be specifically adjusting a main radiation direction of the first target MIMO antenna. By making the adjusted radiation direction face the base station, it is beneficial to enhancing the received signal strength of the first target MIMO antenna. In specific implementation, the radiation direction of the first target MIMO antenna may be adjusted to face the base station side as much as possible through antenna matching and tuner devices, so as to enhance the signal strength of the first target MIMO antenna and help the plurality of MIMO channels return to an equalization state.

Directivity compensation manner 2: The first target MIMO antenna is switched to a second target antenna; where the second target antenna is an antenna other than MIMO antennas on the plurality of MIMO channels in the electronic device, and a received signal strength of the second target antenna is greater than a second preset strength; and the second preset strength may be set according to an actual requirement, and is used to indicate that the received signal strength is strong. In other words, the first target MIMO antenna is a MIMO antenna with a weaker received signal strength in the MIMO antennas, and the second target antenna is an antenna with a stronger received signal strength in other antennas other than the MIMO antennas in the terminal device. In specific implementation, the MIMO antenna with a weak signal (the first target MIMO antenna) may be switched to another antenna with a strong signal (the second target antenna) through a DPDT switch or the like, to realize MIMO equalization supplement.

Directivity compensation manner 3: A user using the terminal device is guided to change an orientation relative to the base station so that after the user changes the orientation, a changed orientation faces a location of the base station. If radiation directions of all the MIMO antennas on the current terminal device deviate from a direction facing to the base station, signal transmission is blocked, and the above two directivity compensation manners are ineffective, directivity compensation manner 3 can be used. For example, the location of the current connected base station is graphically represented through a UI interface on the terminal device, and a location relationship between the base station and the terminal device is displayed in a directional manner on the UI interface to guide the user to change an orientation of the terminal device relative to the base station, so as to perform directivity MIMO compensation, and thus help the plurality of MIMO channels return to an equalization state.

The embodiment is beneficial for targeted compensation for a signal reception imbalance caused by the directivity difference.

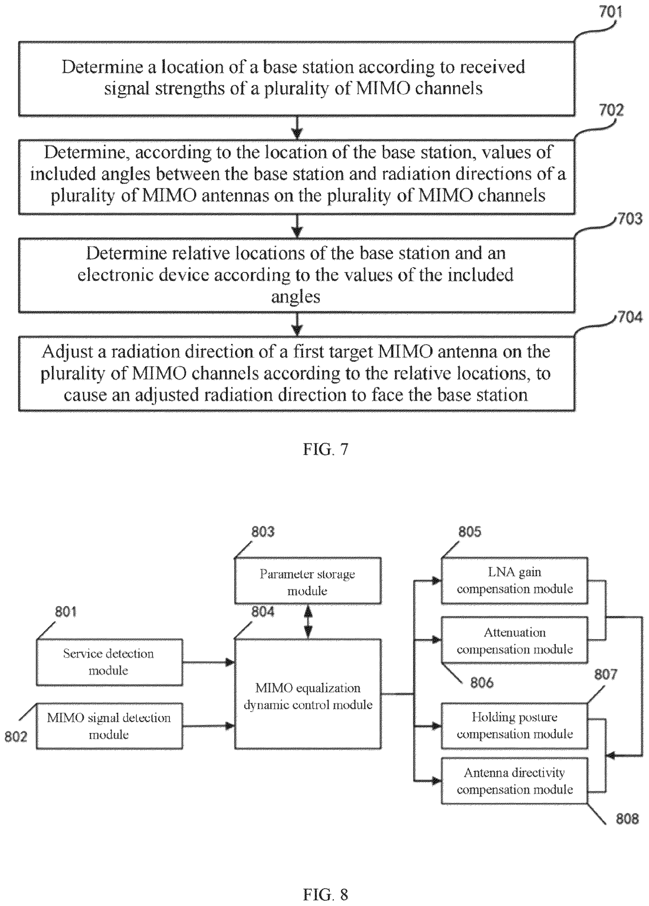

In an embodiment, as mentioned in directivity compensation manner 1, the radiation direction of the first target MIMO antenna on the plurality of MIMO channels is adjusted, to cause the adjusted radiation direction to face the base station. This may be realized by a flowchart as shown in FIG. 7.

At S701, the location of the base station is determined according to the received signal strengths of the plurality of MIMO channels.

At S702, values of included angles between the base station and radiation directions of the plurality of MIMO antennas on the plurality of MIMO channels are determined according to the location of the base station.

At S703, relative locations of the base station and the electronic device are determined according to the values of the included angles.

At S704, the radiation direction of the first target MIMO antenna on the plurality of MIMO channels is adjusted according to the relative locations, to cause an adjusted radiation direction to face the base station.

In this embodiment, there is provided a manner for adjusting the radiation direction of the first target MIMO antenna, which facilitates accurate and effective adjustment of the radiation direction.

In S701, the electronic device may calculate location information of the base station connected to the electronic device based on the received signal strengths of the plurality of MIMO channels.

In S702, the electronic device may calculate the values of the included angles between the base station and the radiation directions of the plurality of MIMO antennas based on the location information of the base station and location information of the plurality of MIMO antennas on the plurality of MIMO channels.

In S703, the electronic device may determine the relative locations of the base station and the electronic device based on the values of the included angles between the base station and the radiation directions of the plurality of MIMO antennas, where the relative locations may include a distance, an angle, and the like between the base station and the electronic device.

In S704, after the electronic device obtains the relative locations of the electronic device and the base station, a current approximate direction to be adjusted is learned, so that the radiation direction of the first target MIMO antenna is adjusted according to the approximate direction, to cause an adjusted radiation direction to face the base station.

In an embodiment, in response to determining that the cause of the signal reception imbalance includes the directivity difference between the electronic device and the base station, LNA gain compensation and attenuation compensation can be simultaneously used for auxiliary compensation while using the directivity compensation, so as to achieve a better compensation effect and achieve equalization in signal reception among the plurality of MIMO channels better and faster.

In an embodiment, the terminal device implementing the signal compensation method includes the following modules as shown in FIG. 8: a service detection module 801, a MIMO signal detection module 802, a parameter storage module 803, a MIMO equalization dynamic control module 804, an LNA gain compensation module 805, an attenuation compensation module 806, a holding posture compensation module 807, and an antenna directivity compensation module 808. The above modules are introduced below.

The service detection module 801 is connected to the MIMO equalization dynamic control module 804, and is configured to detect a current MIMO service of a 5G terminal device. The service here refers to a throughput service of the terminal device, including an uplink throughput and a downlink throughput. The downlink throughput includes SISO, 2x2 MIMO and 4x4 MIMO, while the uplink throughput includes SISO and 2x2 MIMO. There are strong signal, medium signal, weak signal and other scenarios for the service of the terminal device. When detecting that the current terminal device has a high throughput demand, the service detection module 801 first determines whether the current throughput demand is for uplink or downlink, and then determines the throughput demand, so that corresponding MIMO channels are enabled. Further, when the terminal device operates in a weak signal scenario and has a specific requirement for overall sensitivity, it also needs to enable a specific quantity of MIMO channels.

The MIMO signal detection module 802 is connected to the MIMO equalization dynamic control module 804, and is configured to detect a MIMO signal of the terminal device. When a service requires a maximum throughput, signal reception of four MIMO channels needs to be in an equalization state. MIMO signal detection here can be conducted by analyzing a signal sent received by the terminal device from the base station. Particular keyword analysis is performed on the signal received by the terminal device to obtain received signal strengths of the four channels in each band. Here, keywords include RSRP, SNR, BER and throughput on each channel. It is assumed that received signal strengths of four MIMO channels in NR band 1 are N1_RX0, N1_RX1, N1_RX2 and N1_RX3, respectively. When a difference between N1_RXx is less than a preset equalization threshold, such as 2dB, it is considered that signal reception is equalized. On the contrary, it is considered that signal reception is imbalanced.

The MIMO equalization dynamic control module 804 is connected to each of the other modules for real-time adjustment and control of MIMO equalization of the 5G terminal device. The MIMO equalization dynamic control module 804 enables a required MIMO channel according to the service requirement currently detected by the service detection module 801, and then determines, according to the received signal strengths of all MIMO channels detected by the MIMO signal detection module 802, whether a signal reception imbalance (also referred to as a MIMO imbalance) exists. If it is determined that an imbalance exists, a MIMO equalization control adjustment function is enabled. In addition, the MIMO equalization dynamic control module 804 is also responsible for calling a control method. Because there are many factors causing the MIMO imbalance, the embodiment calls a corresponding compensation module by determining a decisive factor causing the MIMO imbalance, so as to use the corresponding compensation manner for signal compensation. If the MIMO imbalance is caused by circuit or antenna-related factors, that is, the circuit itself is imbalanced or there is an efficiency difference between antennas, the LNA gain compensation module 805 and/or the attenuation compensation module 806 can be called. If the MIMO imbalance is caused by a holding posture of the terminal device, the holding posture compensation module 807 can be called, and certainly the LNA gain compensation module 805 and/or the attenuation compensation module 806 can also be called for auxiliary compensation. If the MIMO imbalance is caused by a directivity difference between the terminal device and the base station, the antenna directivity compensation module 808 may be called, and certainly the LNA gain compensation module 805 and/or the attenuation compensation module 806 can also be called for auxiliary compensation.

The LNA gain compensation module 805 is connected to the MIMO equalization dynamic control module 804 for compensation and adjustment for the MIMO equalization based on a gain of an LNA. The LNA in the terminal device generally has a plurality of gain levels, such as levels of 0, 1, 2, 3, 4, 5, ..., N, where a gain corresponding to level 0 is the largest and a gain corresponding to level N is the smallest. For example, N=7, and in this case, a gain corresponding to the LNA level 7 is the smallest. Assuming that RSRP is used as a received signal strength, the terminal device tests current RSRPs of the four NR MIMO channels, and an LNA gain level corresponding to RSRP is M, and M<=N. When a RSRP of a current MIMO channel is lower or higher than that of another MIMO channel, an LNA gain level of this channel can be adjusted to a corresponding compensation level, for example, level (M-1) or level (M+1). An RSRP increment and decrement corresponding to each level of LNA can be learned by testing before delivery, and a table of mapping relationships is formed and stored in the parameter storage module 803, which is accessed and called in real time by the MIMO equalization dynamic control module 804. Further, when an LNA gain reaches a saturation state, that is, when the LNA gain cannot be further increased, in combination with a corresponding SAWLESS auxiliary function, a ByPass control signal can be used to bypass one or two filters in previous and post stages of the LNA, so as to further enhance the RSRP of the LNA. Bypassing one or two filters in the previous and post stages of the LNA by using the ByPass control signal can be understood as: controlling, by using the bypass control signal, the one or two filters in the previous and post stages of the LNA not to operate.

The attenuation compensation module 806 is connected to the MIMO equalization dynamic control module 804 for compensation and adjustment for the MIMO equalization based on attenuation compensation. When non-fixed gain compensation is to be performed, the attenuation compensation module 806 may be called, and two sub-modules, a first attenuation compensation sub-module 8061 and a second attenuation compensation sub-module 8062 are used for implementation. The first attenuation compensation sub-module 8061 is an adjustable attenuation network placed on each MIMO path to directly attenuate a received signal strength on the MIMO path. The second attenuation compensation sub-module 8062 may be understood as an antenna efficiency attenuation module, which adjusts efficiency of an antenna by placing a tuning device on each antenna.

The holding posture compensation module 807 is connected to the MIMO equalization dynamic control module 804 for real-time adjustment of MIMO equalization based on a holding posture detection. If a finger or a palm holds the terminal device at a specific area at the edge, and a holding location is just at or near a location of a MIMO antenna of NR, the holding posture compensation module 807 will detect the signal, position the specific MIMO antenna that is affected, and then switch the affected MIMO antenna to another unaffected antenna. In specific implementation, the LNA gain compensation module 805 and/or the attenuation compensation module 806 can also be called for auxiliary compensation when the holding posture compensation is performed.

The antenna directivity compensation module 808 is connected to the MIMO equalization dynamic control module 804 for real-time adjustment of MIMO equalization based on a directivity difference with the base station. Antenna directivity compensation mainly refers to compensating receiving performance of a MIMO antenna with poor directivity, and there are mainly three implementations, namely, directivity compensation manners 1 to 3 mentioned in the above embodiment. In specific implementation, the LNA gain compensation module 805 and/or the attenuation compensation module 806 can also be called for auxiliary compensation when the antenna directivity compensation is performed.

In this embodiment, through the LNA gain compensation, attenuation compensation, holding posture compensation, and antenna directivity compensation manners, the terminal device is controlled to actively perform signal compensation and adjustment for an NR MIMO channel, so as to ensure the reception equalization of all NR MIMO channels of the terminal device. States of 4x4 MIMO receiving channels in a specific NR band can be dynamically adjusted, so that four-channel equalization is achieved to improve throughput performance of the terminal device, especially to improve performance effects of peak uploading and downloading throughputs of the terminal device.

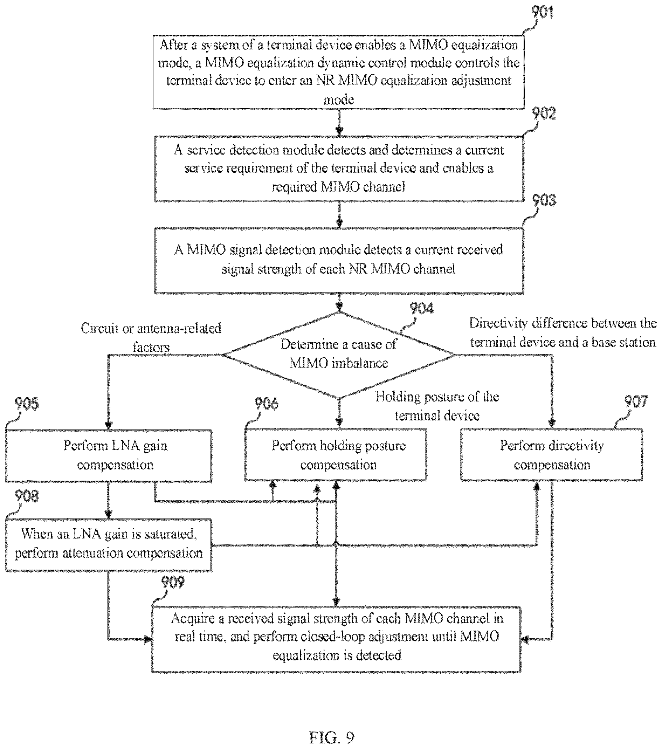

In an embodiment, a flowchart of a signal compensation method may refer to FIG. 9, which includes S901 to S909.

At S901, after a system of a terminal device enables a MIMO equalization mode, a MIMO equalization dynamic control module controls the terminal device to enter an NR MIMO equalization adjustment mode.

At S902, a service detection module detects and determines a current service requirement of the terminal device and enables a required MIMO channel.

At S903, a MIMO signal detection module detects a received signal strength of each MIMO channel of current NR.

At S904, a cause of MIMO imbalance is determined. Here, in response to the cause of the MIMO imbalance is circuit or antenna-related factors, the method proceeds to S905; in response to the cause of the MIMO imbalance is a holding posture of the terminal device, the method proceeds to S906; and in response to the cause of the MIMO imbalance is a directivity difference between the terminal device and a base station, the method proceeds to S907.

At S905, LNA gain compensation is performed.

At S906, holding posture compensation is performed.

At S907, directivity compensation is performed.

At S908, when an LNA gain is saturated, attenuation compensation is performed.

At S909, a received signal strength of each MIMO channel is acquired in real time, and closed-loop adjustment is performed until MIMO equalization is detected.

Here, when the holding posture compensation is performed in response to the cause of the MIMO imbalance being the holding posture of the terminal device, the LNA gain compensation and attenuation compensation can still be called for dynamic adjustment. When the antenna directivity compensation is performed in response to the cause of the MIMO imbalance is the directivity difference between the terminal device and the base station, the LNA gain compensation and attenuation compensation can still be called for dynamic adjustment.

In this embodiment, the following cases are considered: for the current 5G terminal device, a high operating frequency, the user's use angle, a holding posture, or a surrounding obstacle may directly affect a transmission effect of 5G MIMO; if the user's holding posture is wrong, a location of the terminal device is wrong, and a direction is different from a direction of the base station, all paths of 5G MIMO signals will be attenuated to a great extent. Therefore, in this embodiment, the terminal device can dynamically adjust equalization of MIMO paths according to a change of user's angle relative to the terminal device, a change of a direction relative to the base station and a change of the holding posture, thereby better ensuring reception equalization among the MIMO channels of the terminal device and improving throughput performance of the terminal device. In this embodiment, through the NR MIMO equalization design, the terminal device can perform MIMO equalization adjustment according to a scene requirement, a use environment condition and an NR service requirement, and realize a differentiated supplement to NR multi-channel reception, so as to improve the peak uplink and downlink throughput performance of the terminal device.

It should be noted that the above examples in the embodiments of the present disclosure are for the convenience of understanding and are not limited to the technical schemes of the present disclosure.

The steps of the above methods are divided only for the sake of clear description, and during implementation, the steps may be combined into one step or one step may be split into multiple steps. All shall fall within the scope of protection of the present disclosure provided that the same logical relationship is included. Insignificant modifications added to or insignificant designs introduced into an algorithm or a procedure without changing the core of the algorithm or the procedure shall fall within the scope of protection of the present disclosure.

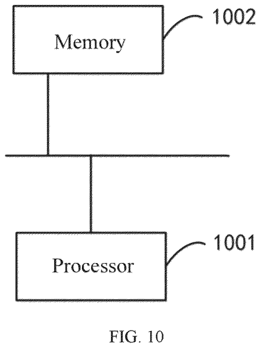

An embodiment of the present disclosure provides an electronic device, as shown in FIG. 10, including: at least one processor 1001; and a memory 1002 communicatively connected to the at least one processor 1001; where the memory 1002 stores instructions executable by the at least one processor 1001, and the instructions, when executed by the at least one processor 1001, enable the at least one processor 1001 to execute the signal compensation method described above.

Herein, the memory 1002 and the at least one processor 1001 are connected by means of a bus, and the bus may include any number of bus interconnects and bridges, and the bus connects the at least one processor 1001 and various circuits of the memory 1002 together. The bus may also connect various other circuits such as a peripheral device, a voltage regulator and a power management circuit, which are well known in the art and therefore will not be further described here. A bus interface provides an interface between the bus and a transceiver. The transceiver may be one element or multiple elements, such as multiple receivers and transmitters, and provide a unit for communicating with various other apparatuses on a transmission medium. Data that has been processed by the processor 1001 is transmitted on a wireless medium by means of an antenna. Further, the antenna also receives data and transmits the data to the processor 1001.

The processor 1001 is responsible for bus management and general processing, and may also provide various functions, including timing, peripheral interface, voltage regulation, power management and other control functions. The memory 1002 may be configured to store data used by the processor 1001 when performing operations.

A further embodiment of the present disclosure provides a computer-readable storage medium storing a computer program. The computer program, when executed by a processor, causes the processor to perform the method according to the embodiments above.

That is, those of ordinary skill in the art can understand that all or some of the steps in the methods for implementing the above embodiments can be completed by instructing related hardware through a program, which is stored in a storage medium and includes several instructions configured to enable a device (which may be a single-chip microcomputer, a chip, etc.) or a processor to execute all or some of the steps of the methods according to the embodiments of the present disclosure. The aforementioned storage medium includes: various media that can store program codes, such as a USB flash drive, a mobile hard disk, a read-only memory (ROM), a random-access memory (RAM), a magnetic disk or an optical disk.

According to the signal compensation method provided by the embodiments of the present disclosure, received signal strengths of a plurality of MIMO channels of an electronic device are detected; in response to determining, according to the received signal strengths, that signal reception imbalance exists among the plurality of MIMO channels, a cause of the signal reception imbalance is determined; and a compensation manner corresponding to the cause of the signal reception imbalance is then determined, and signal compensation is performed according to the compensation manner corresponding to the cause of the signal reception imbalance until signal reception equalization is detected on the plurality of MIMO channels. In this embodiment, in response to determining that signal reception imbalance exists among the MIMO channels, according to the analyzed cause of the imbalance phenomenon, a targeted compensation manner is used for signal compensation until signal reception equalization is detected on the plurality of MIMO channels. Corresponding compensation manners targeted at different causes of the imbalanced phenomenon are used, to perform adaptive signal compensation. Therefore, the effectiveness of signal compensation can be improved, a reception equalization of the various MIMO channels of the electronic device can be ensured, and throughput performance of electronic device can be improved.

Those of ordinary skill in the art can understand that the above embodiments are only some embodiments for implementing the present disclosure, while in practical applications, various changes in form and detail can be made therein without departing from the principle and scope of the present disclosure.

## Claims

1. A signal compensation method, applied to an electronic device operating in a multi-input multi-output (MIMO) state, the method comprising:
detecting received signal strengths of a plurality of MIMO channels of the electronic device;
in response to determining, according to the received signal strengths, that signal reception imbalance exists among the plurality of MIMO channels, determining a cause of the signal reception imbalance; and
determining a compensation manner corresponding to the cause of the signal reception imbalance, and performing signal compensation according to the compensation manner corresponding to the cause of the signal reception imbalance until signal reception equalization is detected on the plurality of MIMO channels.

2. The signal compensation method of claim 1, wherein in response to determining that the cause of the signal reception imbalance comprises circuit or antenna-related factors, the compensation manner comprises: low noise amplifier (LNA) gain compensation and/or attenuation compensation;
in response to the compensation manner comprising the LNA gain compensation, the performing signal compensation according to the compensation manner corresponding to the cause of the signal reception imbalance comprises: compensating a gain of an LNA on a first target MIMO channel in the plurality of MIMO channels; and
in response to the compensation manner comprising the attenuation compensation, the performing signal compensation according to the compensation manner corresponding to the cause of the signal reception imbalance comprises: activating an attenuation network on a second target MIMO channel in the plurality of MIMO channels to attenuate a received signal strength of the second target MIMO channel.

3. The signal compensation method of claim 2, wherein the compensating a gain of an LNA on a first target MIMO channel in the plurality of MIMO channels comprises:
adjusting the gain of the LNA on the first target MIMO channel according to a received signal strength of the first target MIMO channel and a received signal strength of a third target MIMO channel in the plurality of MIMO channels, to cause a strength difference between the received signal strength of the first target MIMO channel and the received signal strength of the third target MIMO channel to be less than a preset equalization threshold under the action of an adjusted gain.

4. The signal compensation method of claim 3, wherein the adjusting the gain of the LNA on the first target MIMO channel according to a received signal strength of the first target MIMO channel and a received signal strength of a third target MIMO channel in the plurality of MIMO channels comprises:
determining the strength difference between the received signal strength of the first target MIMO channel and the received signal strength of the third target MIMO channel; and
determining a gain level corresponding to the strength difference; wherein the gain level is corresponding to a gain, and a larger gain level indicates a smaller gain; and
the current gain level of the LNA on the first target MIMO channel is adjusted to the gain level corresponding to the strength difference.

5. The signal compensation method of any one of claims 2 to 4, wherein after the compensating a gain of an LNA on a first target MIMO channel in the plurality of MIMO channels, further comprising:
in response to gain saturation being reached and signal reception equalization undetected on the plurality of MIMO channels, controlling, by using a bypass control signal, a previous-stage filter and/or a post-stage filter of the LNA on the first target MIMO channel not to operate until signal quality equalization is detected on the plurality of MIMO channels.

6. The signal compensation method of claim 2, wherein the attenuation network comprises a first attenuation network and/or a second attenuation network;
the first attenuation network is provided between an LNA and a MIMO antenna on the MIMO channel for attenuating the received signal strength of the second target MIMO channel; and
the second attenuation network is provided on the MIMO antenna on the MIMO channel for attenuating the received signal strength of the second target MIMO channel by adjusting efficiency of the MIMO antenna.

7. The signal compensation method of claim 1, wherein in response to determining that the cause of the signal reception imbalance comprises a holding posture of the electronic device, the compensation manner comprises one or any combination of the following: holding posture compensation, LNA gain compensation, or attenuation compensation;
in response to the compensation manner comprising the holding posture compensation, the performing signal compensation according to the compensation manner corresponding to the cause of the signal reception imbalance comprises:
determining a MIMO antenna affected by the holding posture of the electronic device, and switching the affected MIMO antenna to a target antenna; wherein the target antenna is an antenna free of an effect of the holding posture other than MIMO antennas on the plurality of MIMO channels in the electronic device;
in response to the compensation manner comprising the LNA gain compensation, the performing signal compensation according to the compensation manner corresponding to the cause of the signal reception imbalance comprises: compensating a gain of an LNA on a first target MIMO channel in the plurality of MIMO channels; and
in response to the compensation manner comprising the attenuation compensation, the performing signal compensation according to the compensation manner corresponding to the cause of the signal reception imbalance comprises: activating an attenuation network on a second target MIMO channel in the plurality of MIMO channels to attenuate a received signal strength of the second target MIMO channel.

8. The signal compensation method of claim 1, wherein in response to determining that the cause of the signal reception imbalance comprises a directivity difference between the electronic device and a base station, the compensation manner comprises one or any combination of the following: directivity compensation, LNA gain compensation, or attenuation compensation;
in response to the compensation manner comprising the directivity compensation, the performing signal compensation according to the compensation manner corresponding to the cause of the signal reception imbalance comprises:
adjusting a radiation direction of a first target MIMO antenna on the plurality of MIMO channels, to cause an adjusted radiation direction to face the base station; wherein a received signal strength of the first target MIMO antenna is less than a first preset strength; or
switching the first target MIMO antenna to a second target antenna; wherein the second target antenna is an antenna other than MIMO antennas on the plurality of MIMO channels in the electronic device, and a received signal strength of the second target antenna is greater than a second preset strength; or
guiding a user using the electronic device to change an orientation relative to the base station so that after the user changes the orientation, a changed orientation faces a location of the base station;
in response to the compensation manner comprising the LNA gain compensation, the performing signal compensation according to the compensation manner corresponding to the cause of the signal reception imbalance comprises: compensating a gain of an LNA on a first target MIMO channel in the plurality of MIMO channels; and
in response to the compensation manner comprising the attenuation compensation, the performing signal compensation according to the compensation manner corresponding to the cause of the signal reception imbalance comprises:
activating an attenuation network on a second target MIMO channel in the plurality of MIMO channels to attenuate a received signal strength of the second target MIMO channel.

9. The signal compensation method of claim 8, wherein the adjusting a radiation direction of a first target MIMO antenna on the plurality of MIMO channels, to cause an adjusted radiation direction to face the base station comprises:
determining the location of the base station according to the received signal strengths of the plurality of MIMO channels;
determining, according to the location of the base station, values of included angles between the base station and radiation directions of the plurality of MIMO antennas on the plurality of MIMO channels;
determining relative locations of the base station and the electronic device according to the values of the included angles; and
adjusting the radiation direction of the first target MIMO antenna on the plurality of MIMO channels according to the relative locations, to cause an adjusted radiation direction to face the base station.

10. The signal compensation method of claim 1, before the detecting received signal strengths of a plurality of MIMO channels of the electronic device, further comprising:
detecting a throughput service of the electronic device;
determining a characteristic of the throughput service; and
in response to determining, according to the characteristic of the throughput service, that the plurality of MIMO channels of the electronic device need to be enabled, enabling the plurality of MIMO channels of the electronic device.

11. The signal compensation method of claim 1, after the detecting received signal strengths of a plurality of MIMO channels of the electronic device, further comprising:
acquiring a difference between received signal strengths of any two MIMO channels; and
in response to a difference greater than a preset equalization threshold existing, determining that signal reception imbalance exists among the plurality of MIMO channels.

12. An electronic device, comprising: at least one processor; and
a memory communicatively connected to the at least one processor, wherein
the memory stores instructions executable by the at least one processor, and the instructions, when executed by the at least one processor, enable the at least one processor to execute the signal compensation method of any one of claims 1 to 11.

13. A computer-readable storage medium storing a computer program which, when executed by a processor, implements the signal compensation method of any one of claims 1 to 11.
